# EUROPÄISCHE PATENTSCHRIFT

(11) **EP 2 690 339 B1**
(45) Veröffentlichungstag und Bekanntmachung des Hinweises auf die Patenterteilung: **19.11.2014**
(21) Anmeldenummer: 13176429.2
(22) Anmeldetag: 15.07.2013
(51) Int. Cl.: F16L 29/04

(54) **Kupplungsteil für eine Druckmittel-Leitungskupplung**
Coupling section for a pressure line coupling
Elément de raccordement pour un raccord de conduit sous pression

(30) Priorität: 27.07.2012 DE 102012106873
(43) Veröffentlichungstag der Anmeldung: 29.01.2014
(73) Patentinhaber: Voswinkel Entwicklungs- und Verwaltungs-GmbH & Co. KG, 58540 Meinerzhagen (DE)
(72) Erfinder: Weiland, Fritz Georg, 58540 Meinerzhagen (DE); Ginczek, Christoph, 51709 Marienheide (DE)
(74) Vertreter: Patentanwälte Dr. Solf & Zapf

(56) Entgegenhaltungen:
- GB-A- 585 038
- US-A- 2 850 298
- US-A1- 2008 271 797

## Beschreibung

Die vorliegende Erfindung betrifft gemäß dem Oberbegriff des unabhängigen Anspruchs 1 ein Kupplungsteil für eine - aus insgesamt zwei zum Kuppeln zusammensteckbaren und sich dabei selbsttätig gegenseitig öffnende Schließventile aufweisenden Kupplungsteilen bestehende - Druckmittel-Leitungskupplung, wobei das Schließventil einen in einem Kupplungsgehäuse derart entsprechend einer Kupplungs-Steckachse axial beweglich geführten Ventilkörper aufweist, dass letzterer beim Kuppelvorgang durch Anlage an dem anderen Kupplungsteil aus einer Schließstellung selbsttätig gegen eine Schließfederkraft in das Kupplungsgehäuse hinein in eine Öffnungsstellung bewegbar ist, wobei der Ventilkörper in seinem vorderen, in Schließrichtung weisenden Umfangsbereich eine elastische Ringdichtung aufweist, die als Axialdichtung mit einer eine vordere Gehäuseöffnung umschließenden Dichtfläche des Kupplungsgehäuses zusammenwirkt, wobei die Ringdichtung in ihrem radial inneren Umfangsbereich von vorne von einem Halteabschnitt des Ventilkörpers überdeckt ist und in ihrem radial äußeren Umfangsbereich zur axialen Anlage an der Dichtfläche freiliegt.

Derartige Kupplungsteile sind in unterschiedlichen konstruktiven Ausführungen seit vielen Jahren auf dem Markt und im praktischen Einsatz. Solche Kupplungsteile sind z.B. aus US 285 0 298, US 2008/271797 oder GB 585 038 bekannt. Sie erlauben ein schnelles Verbinden und Trennen von Druckmittelleitungen, wobei im getrennten Zustand durch die Schließventile Leckagen vermieden werden. Bei vielen bekannten Ausführungen ist der Ventilkörper als würfelartiges Element ausgebildet, welches mit Eckkanten innerhalb des zylindrischen Innenumfangs des Kupplungsgehäuses verschiebbar geführt ist, wobei im Bereich von Würfel-Seitenflächen Strömungspassagen für das Druckmittel gebildet sind. Auf seiner vorderen, in VentilSchließrichtung weisenden Seite ist eine Halteschraube in eine Gewindebohrung des Würfelkörpers eingeschraubt, und die Halteschraube bildet mit einem äußeren Umfangsrand ihres vorderen, flachen Schraubenkopfes den Halteabschnitt zur bereichsweisen Überdeckung und Halterung der Ringdichtung. Die inneren Ventilteile werden von vorne, von der Kupplungsseite her in das Kupplungsgehäuse eingesetzt, und das Kupplungsgehäuse wird dann mit einem Einschraubring verschlossen, der auch die Dichtfläche für die Ringdichtung aufweist. Diese bekannte Ausführung ist mit einer Reihe von Nachteilen verbunden. So ist zunächst die Herstellung und Montage problematisch. Zur Montage des Ventilkörpers wird die Ringdichtung auf das würfelartige Element aufgelegt und mit der Halteschraube fixiert, indem die Halteschraube durch die Ringdichtung hindurch in die Gewindebohrung des Würfelelementes eingeschraubt wird. Dabei muss sehr sorgfältig darauf geachtet werden, dass die Dichtung nicht zu stark eingespannt wird, weil es ansonsten durch zu starkes Verpressen im Betrieb zu Schäden durch Abscheren der Dichtung kommen kann. Die Halteschraube muss dabei gleichzeitig mit einem geeigneten Klebstoff gegen Lösen gesichert werden. Es hat sich in der Praxis gezeigt, dass diese Herstellung nicht prozesssicher ist, weil die Dichtungsmontage hinsichtlich der Dichtungsverpressung einer großen Streuung unterliegt. Außerdem tritt im Betrieb das weitere Problem auf, dass in der VentilSchließstellung häufig sehr hohe Innendrücke von über 400 bar auftreten können, und der jeweilige Druck bzw. die daraus resultierende Kraft (F = p · A; Kraft gleich Druck mal wirksame Fläche) belastet die Gewindeverbindungen zwischen dem Würfelelement und der Halteschraube des Ventilkörpers sowie auch zwischen dem vorderen Einschraubring und dem Kupplungsgehäuse, so dass es oftmals bei entsprechend hohem Innendruck zu Ausfällen des Kupplungsteils durch Ausreißen mindestens einer Gewindeverbindung kommt.

Der vorliegenden Erfindung liegt die Aufgabe zu Grunde, ein Kupplungsteil der beschriebenen, gattungsgemäßen Art zu schaffen, das mit konstruktiv einfachen Mitteln für hohe Drücke ausgelegt ist und dennoch eine erhöhte Betriebssicherheit zur Vermeidung von Störungen und Schäden sowie aber auch eine einfache und prozesssichere Herstellung und Montage und zudem gute Durchflussparameter gewährleistet.

Erfindungsgemäß wird dies durch die Merkmale des unabhängigen Anspruchs 1 erreicht. Vorteilhafte Weiterbildungen und Ausgestaltungsmerkmale der Erfindung sind in den abhängigen Ansprüchen sowie auch in der anschließenden Beschreibung enthalten.

Demnach ist der die Ringdichtung von vorne bereichsweise überdeckende Halteabschnitt erfindungsgemäß von einem separaten Haltering gebildet, der von einem mit dem Ventilkörper einstückig verbundenen, insbesondere scheibenförmigen Halteelement formschlüssig gehalten wird. Somit erfolgt vorteilhafterweise die Montage und Halterung der Ringdichtung ohne Verschraubung, so dass eine erhöhte Druckfestigkeit von bis zu mindestens 420 bar erreicht wird. Zudem ist hierbei mit Vorteil vorgesehen, dass der Haltering an seinem radial inneren Umfang ein axial in Ventil-Öffnungsrichtung nach hinten vorspringendes und zur axialen Abstützung in einem von der Ringdichtung umschlossenen Bereich unmittelbar an dem Ventilkörper anliegendes Anschlagelement aufweist. Bevorzugt wird das Anschlagelement von einem umfangsgemäß geschlossenen Ringsteg gebildet. Der Haltering ist hierbei mit seinem einstückigen Anschlagelement in Anpassung an die axial gemessene Dicke der Ringdichtung derart ausgelegt, dass die Ringdichtung in ihrem von dem Haltering überdeckten Bereich definiert und vorzugsweise ohne elastische Druckverformung zwischen dem Ventilkörper und dem Haltering gekammert ist. Durch diese vorteilhafte Ausgestaltung wird bei der Montage eine hohe Prozesssicherheit erreicht, weil die Dichtung stets optimal, ohne Verpressung und allenfalls kraftschlüssig zwischen dem Ventilkörper und dem Haltering sitzt, so dass Schäden durch zu starkes Verpressen der Dichtung praktisch ausgeschlossen sind.

Zur Montage ist bevorzugt vorgesehen, dass das den Haltering halternde Halteelement derart ausgebildet ist, dass es aus einem Vormontagezustand, in dem es einen ein axiales Aufsetzen des Halterings ermöglichenden Außendurchmesser aufweist, in einen Fertigmontagezustand plastisch umgeformt oder umformbar ist, in dem es mit seinem Außenumfang formschlüssig in den Innenumfang des Halterings eingreift. Bei dieser Montage handelt es sich folglich um eine Art Senknietverbindung. Die plastische Umformung des Halteelementes kann durch einen einfachen axialen Stauchvorgang mittels einer geeigneten Pressvorrichtung erfolgen. Dabei ist von Vorteil, dass die jeweilige Stauch-Presskraft nicht zu einer unzulässigen Verpressung der Ringdichtung führen kann, weil der Haltering ja über sein Anschlagelement definiert an dem Ventilkörper abgestützt ist, so dass der die Ringdichtung aufnehmende axiale Abstand unabhängig von der Stauch-Presskraft stets konstant ist, sofern natürlich die Presskraft ausreichend hoch ist, um die feste Anlage zwischen Ventilkörper und Haltering zu erreichen.

Anhand eines bevorzugten, in der Zeichnung veranschaulichten Ausführungsbeispiels soll die Erfindung im Folgenden weitergehend erläutert werden. Es zeigen:
- Fig. 1: eine halb axial geschnittene Seitenansicht eines erfindungsgemäßen Kupplungsteils einer Druckmittel-Leitungskupplung,
- Fig. 2: eine halb axial geschnittene Seitenansicht eines zugehörigen zweiten Kupplungsteils der Leitungskupplung in lagerichtiger Zuordnung zu dem erfindungsgemäßen Kupplungsteil gemäß Fig. 1 vor dem Steckkuppeln bzw. nach dem Trennen der Kupplungsverbindung,
- Fig. 3: eine entsprechende Darstellung der beiden Kupplungsteile gemäß Fig. 1 und 2 in ihrer zusammengesteckten Kupplungslage mit geöffneten Schließventilen,
- Fig. 4: die Kupplungsteile gemäß Fig. 1 und 2 in einer über einen Umfang von 90° aufgeschnittenen Perspektivdarstellung,
- Fig. 5: eine der Fig. 4 entsprechende Ansicht in der Kupplungslage gemäß Fig. 3,
- Fig. 6: eine gesonderte und vergrößerte Perspektivansicht des Ventilkörpers des erfindungsgemäßen Kupplungsteils in einem Vormontagezustand,
- Fig. 7: einen diametralen Axialschnitt des Ventilkörpers im Vormontagezustand gemäß Fig. 6,
- Fig. 8: eine Perspektivansicht des Ventilkörpers analog zu Fig. 6, jedoch in einem Fertigmontagezustand, und
- Fig. 9: einen Axialschnitt analog zu Fig. 7 im Zustand gemäß Fig. 8.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels eine erfinderische Bedeutung haben.

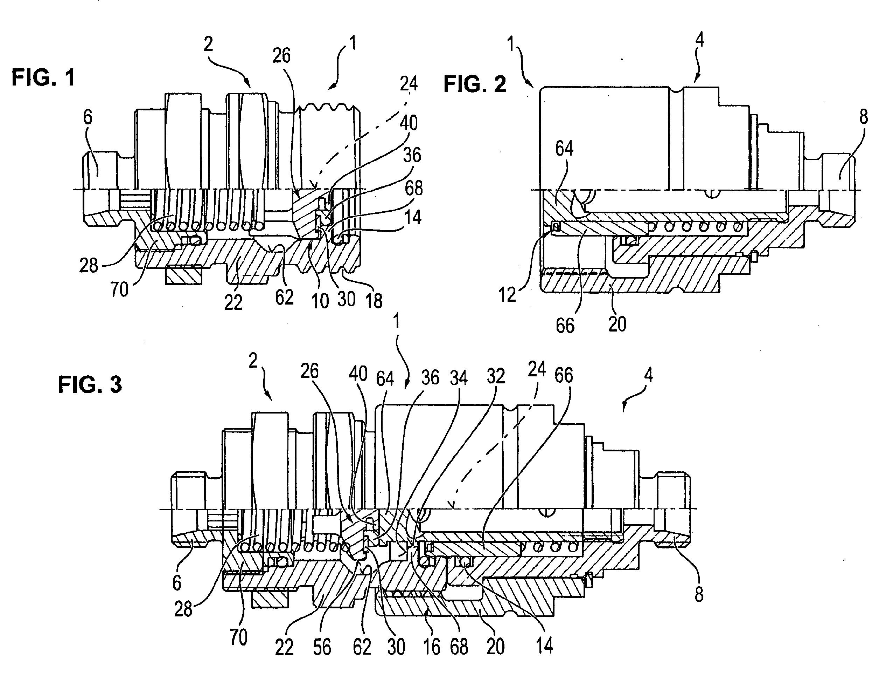

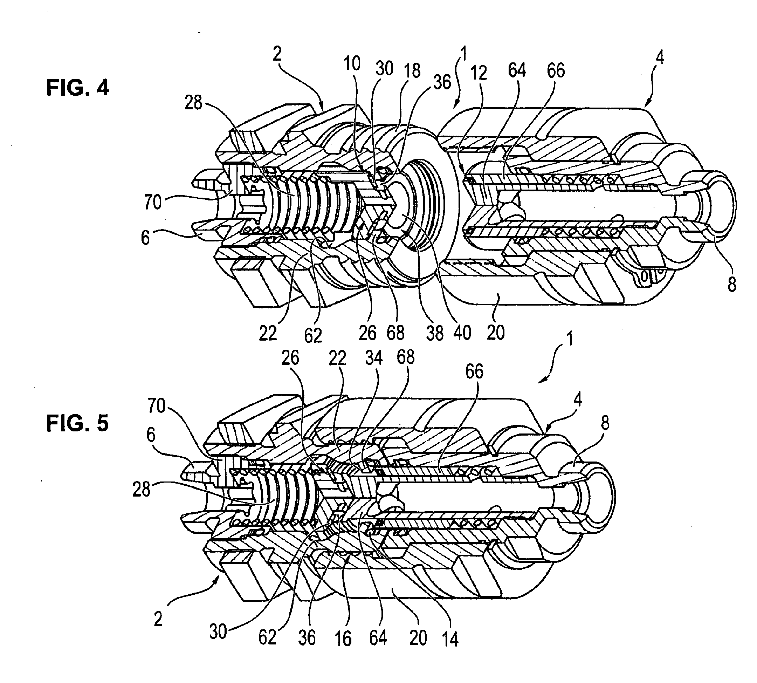

Einleitend sei zunächst auf die Darstellungen in den Fig. 3 und 5 verwiesen, in denen jeweils eine Druckmittel-Leitungskupplung 1 in einem gekuppelten Zustand dargestellt ist. Diese Leitungskupplung 1 besteht aus zwei zusammensteckbaren Kupplungsteilen 2, 4, die auf ihren voneinander abgewandten Seiten über Anschlüsse 6, 8 mit nicht dargestellten Druckmittel-Leitungen, beispielsweise Rohrleitungen, verbunden bzw. zu verbinden sind, und die jeweils ein federbelastetes Schließventil 10, 12 enthalten, um in einem getrennten, entkuppelten Zustand - siehe Fig. 1, 2 und 4 - die jeweils angeschlossene Druckmittel-Leitung selbsttätig druckdicht zu verschließen. Während des Kuppelvorgangs beim Zusammenstecken der Kupplungsteile 2, 4 öffnen sich die Schließventile 10, 12 durch gegenseitige Anlage selbsttätig, um den Durchgang für das jeweilige durch die Leitungen strömende Medium freizugeben, siehe Fig. 3 und 5.

Die vorliegende Erfindung betrifft nun eines der zwei Kupplungsteile, und zwar insbesondere das als Kupplungsmuffe 2 ausgebildete Kupplungsteil, wobei das andere Kupplungsteil als Kupplungsstecker 4 ausgebildet ist. Der Kupplungsstecker 4 ist bereichsweise in die Kupplungsmuffe 2 einsteckbar, wobei eine umfangsgemäße Abdichtung über eine Dichtung 14 erfolgt. Zudem sind geeignete Verriegelungsmittel 16 zum lösbaren Verriegeln der Kupplungsteile 2, 4 in der steckgekuppelten Kupplungslage vorgesehen. Wie dargestellt sind die Verriegelungsmittel 16 bevorzugt von einem Außengewinde 18 der Kupplungsmuffe 2 und von einer mit einem korrespondierenden Innengewinde auf das Außengewinde 18 aufschraubbaren Überwurfmutter 20 des Kupplungssteckers 4 gebildet.

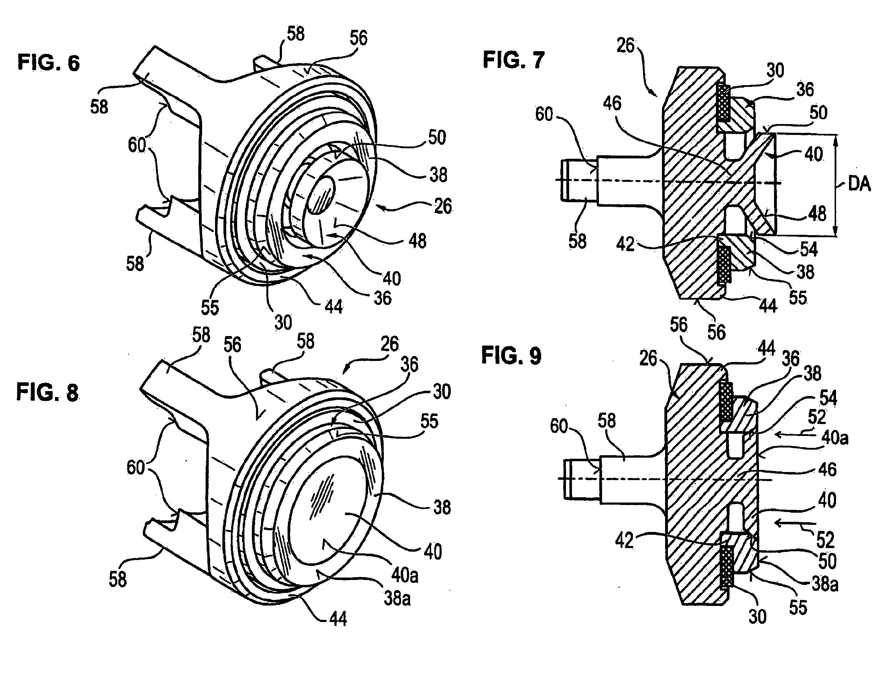

Was nun das erfindungsgemäße Kupplungsteil 2 betrifft, so soll dieses anhand der Fig. 1 und 3 bis 9 genauer beschrieben werden. Das Schließventil 10 dieses Kupplungsteils 2 weist einen in einem Kupplungsgehäuse 22 derart entsprechend einer Kupplungs-Steckachse 24 axial beweglich geführten Ventilkörper 26 auf, dass dieser beim Kuppelvorgang durch Anlage an dem anderen Kupplungsteil 4 (vgl. Fig. 3 und 5) aus einer vorderen Schließstellung (Fig. 1 und 4) selbsttätig gegen eine Schließfederkraft nach hinten in das Kupplungsgehäuse 22 hinein in eine Öffnungsstellung (Fig. 3 und 5) bewegbar ist. Die Schließfederkraft wird von einer - bevorzugt als Schraubendruckfeder ausgebildeten - Schließfeder 28 erzeugt, die axial zwischen dem Ventilkörper 26 und einem Widerlager innerhalb des Kupplungsgehäuses 22 angeordnet ist. Der Ventilkörper 26 weist in seinem vorderen, in Schließrichtung weisenden Umfangsbereich eine elastische Ringdichtung 30 auf, siehe dazu besonders Fig. 6 bis 9. Die Ringdichtung 30 wirkt als Axialdichtung mit einer radialen, d. h. senkrecht zur Kupplungsachse 24 verlaufenden und eine vordere Gehäuseöffnung 32 umschließenden Dichtfläche 34 des Kupplungsgehäuses 22 zusammen, siehe insbesondere Fig. 3 und 5. Dabei ist die Ringdichtung 30 - siehe dazu vor allem Fig. 6 bis 9 - in ihrem radial inneren Umfangsbereich von vorne von einem Halteabschnitt 36 des Ventilkörpers 26 überdeckt, liegt aber in ihrem radial äußeren Umfangsbereich vorne zur Anlage an der Dichtfläche 34 frei.

Wie sich nun am besten aus den Fig. 6 bis 9 ergibt, ist erfindungsgemäß der die Ringdichtung 30 von vorne bereichsweise überdeckende Halteabschnitt 36 von einem ursprünglich separaten Haltering 38 gebildet, wobei dieser Haltering 38 gemäß Fig. 8 und 9 von einem mit dem Ventilkörper 26 einstückig verbundenen, insbesondere scheibenförmigen Halteelement 40 formschlüssig gehalten wird. Dabei weist der Haltering 38 gemäß Fig. 7 und 9 an seinem radial inneren Umfang ein axial in Ventil-Öffnungsrichtung nach hinten vorspringendes und zur axialen Abstützung in einem von der Ringdichtung 30 umschlossenen Bereich unmittelbar an dem Ventilkörper 26 anliegendes Anschlagelement 42 auf. In der dargestellten, bevorzugten Ausführung ist das Anschlagelement 42 als umfangsgemäß geschlossener Ringsteg ausgebildet. Hierbei ist der Haltering 38 mit seinem Anschlagelement 42 in Anpassung an die axiale Dicke der Ringdichtung 30 derart ausgelegt, dass die Ringdichtung 30 in ihrem von dem Haltering 38 überdeckten Bereich definiert und vorzugsweise ohne elastische Druckverformung zwischen dem Ventilkörper 26 und dem Haltering 38 gekammert ist. Dies bedeutet, dass die Ringdichtung 30 im Wesentlichen ohne Verpressung nur kraftschlüssig oder gegebenenfalls mit geringem Spiel gehalten ist. Dadurch werden Beschädigungen im Betrieb vermieden.

In weiterer vorteilhafter Ausgestaltung weist der Ventilkörper 26 in seinem radial äußeren, die Ringdichtung koaxial umschließenden Umfangsbereich einen in Schließrichtung vorspringenden Anschlagabschnitt 44 derart auf, dass der Ventilkörper 26 in seiner mit einem inneren Druck beaufschlagten Schließstellung mit dem Anschlagabschnitt 44 unter definierter elastischer Verpressung der Ringdichtung 30 an einer Gegenfläche innerhalb des Kupplungsgehäuses 22 zur Anlage gelangt. In Fig. 1 ist zwar grundsätzlich die Schließstellung des Ventilkörpers 26 dargestellt, jedoch ist der Ventilkörper 26 nicht mit einem inneren Druck beaufschlagt, so dass der Ventilkörper 26 mit seinem Anschlagabschnitt 44 noch geringfügig von der Gegenfläche des Kupplungsgehäuses 22 beabstandet sein kann. Durch innere Druckbeaufschlagung wird dann der Ventilkörper 26 mit seinem Anschlagabschnitt 44 zur Anlage an der Gegenfläche gebracht, so dass dann die Ringdichtung 30 definiert verpresst wird. Auch hierdurch werden vorteilhafterweise Beschädigungen der Ringdichtung 30 vermieden, es wird aber eine optimale Abdichtung erreicht. Mit Vorteil ist die Gegenfläche von einem äußeren Umfangsbereich der Dichtfläche 34 gebildet, so dass die Gegenfläche in einer gemeinsamen Ebene mit der Dichtfläche 34 liegt.

Wie sich weiterhin aus Fig. 6 bis 9 ergibt, ist es für die beabsichtigte einfache und prozesssichere Herstellung vorteilhaft, wenn das den Haltering 38 halternde Halteelement 40 derart ausgebildet ist, dass es aus einem Vormontagezustand, siehe Fig. 6 und 7, in dem es einen ein axiales Aufsetzen des Halterings 38 ermöglichenden Außendurchmesser DA aufweist, in einen Fertigmontagezustand, siehe Fig. 8 und 9, plastisch umgeformt oder umformbar ist, in dem es mit seinem Außenumfang derart formschlüssig in den Innenumfang des Halterings 38 eingreift, dass der Haltering 38 formschlüssig gegen Lösen gehalten wird. Diese Befestigungsart gleicht einer Senkniet-Verbindung. Gemäß Fig. 7 und 9 ist das Halteelement 40 über einen zentrischen, stiftartigen Verbindungsabschnitt 46 mit dem Ventilkörper 26 einstückig verbunden. Im Vormontagezustand (Fig. 6 und 7) erstreckt sich das Halteelement 40 ausgehend von dem Verbindungsabschnitt 46 leicht konisch und auf seiner in Schließrichtung weisenden Vorderseite eine konische oder konkave Vertiefung 48 aufweisend in Schließrichtung nach vorne. Dabei weist das Halteelement 40 eine äußere Umfangsfläche 50 auf, die im Vormontagezustand etwa zylindrisch ist und den Außendurchmesser DA aufweist, der geringfügig kleiner als der Innendurchmesser des Halterings 38 ist, so dass letzterer über das Halteelement 40 hinweg in Richtung des Ventilkörpers 26 aufgesetzt werden kann. Aus diesem beschriebenen Vormontagezustand ist dann nach dem Aufsetzen des Halterings 38 das Halteelement 40 durch einen axialen Stauchvorgang - siehe dazu die Pfeile 52 in Fig. 9 - in seinen scheibenförmigen Fertigmontagezustand gemäß Fig. 8 und 9 umgeformt oder umformbar. Die äußere Umfangsfläche 50 legt sich dann als fasenartige Schrägfläche in eine innere fasenartige Konusfläche 54 des Halterings 38 an. In diesem Fertigmontagezustand gemäß Fig. 8 und 9 liegen dann vorzugsweise das scheibenförmige Halteelement 40 mit seiner vorderen Stirnfläche 40a und der Haltering 38 mit seiner vorderen Stirnringfläche 38a bündig in einer gemeinsamen Ebene. Der Haltering 38 weist an seinem vorderen Außenumfang eine Anfasung 55 auf, die zur Führung des Ventilkörpers 26 beim Schließvorgang in die vordere Gehäuseöffnung 32 einführbar ist.

Wie sich ferner aus Fig. 6 bis 9 ergibt, ist die Ringdichtung 30 bevorzugt als flache Ringscheibe aus einem elastomeren Material gebildet. Weiterhin weist der Ventilkörper 26 in seinem sich axial in Öffnungsrichtung an den vorderen Umfangsbereich anschließenden Bereich eine kurze zylindrische Führungsfläche 56 auf, die bevorzugt in mehrere axiale Führungsarme 58 übergeht, die zwischen sich Strömungspassagen für das Druckmittel bilden. In der dargestellten, bevorzugten Ausführung weist der Ventilkörper 26 drei Führungsarme 58 auf, die in Umfangsrichtung gleichmäßig um jeweils 120° beabstandet angeordnet sind. Im Bereich der Führungsarme 58 sind durch radiale Stufen Anlageflächen 60 für die Schließfeder 28 gebildet. Gemäß Fig. 1 bis 5 ist innerhalb des Kupplungsgehäuses 22 in einem Bereich, in dem der Ventilkörper 26 in der Öffnungsstellung - siehe Fig. 3 und 5 - mit seiner zylindrischen Führungsfläche 56 angeordnet ist, eine umfangsgemäße innere Durchmesser-Erweiterung 62 gebildet, die als Strömungspassage die Umströmung des Ventilkörpers 26 durch das Druckmittel ermöglicht. Dazu ist es zweckmäßig, die Durchmessererweiterung 62 in axialer Richtung mit einem stetigen, strömungsgünstigen Kurvenverlauf auszubilden.

Wie sich weiterhin noch aus Fig. 1 bis 5 ergibt, kommt beim Kuppelvorgang des erfindungsgemäßen, als Kupplungsmuffe ausgebildeten Kupplungsteils 2 mit dem anderen, als Kupplungsstecker 4 ausgebildeten Kupplungsteil ein fester Stößel 64 des Steckers 4 zur Anlage an der vorderen Stirnfläche (Flächen 38a, 40a) des Ventilkörpers 26, so dass bei dem weitergehenden Kuppelvorgang der Ventilkörper 26 in das Kupplungsgehäuse 22 hinein in seine Öffnungsstellung verschoben wird. Andererseits wird innerhalb des anderen Kupplungsteils 4 ein hülsenförmiger Ventilkörper 66 durch Anlage an dem Kupplungsgehäuse 22 des Kupplungsteils 2 in das Kupplungsteil 4 hinein in eine Öffnungsstellung verschoben.

Weiterhin ist gemäß Fig. 1 bis 5 bevorzugt vorgesehen, dass die in der Schließstellung mit der Ringdichtung 30 des Ventilkörpers 26 zusammenwirkende Dichtfläche 34 an einem einstückig mit dem Kupplungsgehäuse 22 ausgebildeten, radial nach innen ragenden Ringvorsprung 68 gebildet ist. Durch diesen einstückigen Ringvorsprung 68 müssen die inneren Teile des Kupplungsteils 2 von der hinteren, der Kupplungsseite axial gegenüberliegenden Seite her montiert werden. Dazu ist das Kupplungsgehäuse 22 in seinem hinteren, der vorderen Gehäuseöffnung 32 axial gegenüberliegenden Bereich lösbar mit einem eine Montageöffnung verschließenden Anschlussteil 70 verbunden. Wie dargestellt, ist das Anschlussteil 70 mit einem Außengewinde in ein Innengewinde des Kupplungsgehäuses 22 eingeschraubt. Auch diese Ausführung, bei der der vordere Bereich der Dichtfläche 34 einstückig mit dem Kupplungsgehäuse 22 ausgebildet ist, trägt zu einer hohen Druckfestigkeit bei. Durch das hintere Anschlussteil 70 tritt der weitere Vorteil auf, dass eine einfache Anpassung an unterschiedliche Anschlüsse für verschiedene Druckleitungen möglich ist durch entsprechende Wahl des jeweiligen Anschlussteils 70 mit passendem Anschluss 6. Verschiedene Anschlussteile 70 können deshalb nach Art von Adaptern bereitgestellt werden.

## Patentansprüche

1. Kupplungsteil (2) für eine - aus zwei zum Kuppeln zusammensteckbaren und sich dabei selbsttätig gegenseitig öffnende Schließventile (10, 12) aufweisenden Kupplungsteilen (2, 4) bestehende - Druckmittel-Leitungskupplung (1), wobei das Schließventil (10) einen in einem Kupplungsgehäuse (22) derart entsprechend einer Kupplungs-Steckachse (24) axial beweglich geführten Ventilkörper (26) aufweist, dass letzterer beim Kuppelvorgang durch Anlage an dem anderen Kupplungsteil (4) aus einer Schließstellung selbsttätig gegen eine Schließfederkraft in das Kupplungsgehäuse (22) hinein in eine Öffnungsstellung bewegbar ist, wobei der Ventilkörper (26) in seinem vorderen, in Schließrichtung weisenden Umfangsbereich eine elastische Ringdichtung (30) aufweist, die als Axialdichtung mit einer eine vordere Gehäuseöffnung (32) umschließenden Dichtfläche (34) des Kupplungsgehäuses (22) zusammenwirkt, wobei die Ringdichtung (30) in ihrem radial inneren Umfangsbereich von vorne von einem Halteabschnitt (36) des Ventilkörpers (26) überdeckt ist und in ihrem radial äußeren Umfangsbereich zur axialen Anlage an der Dichtfläche (34) freiliegt,
**dadurch gekennzeichnet, dass** der die Ringdichtung (30) von vorne bereichsweise überdeckende Halteabschnitt (36) von einem Haltering (38) gebildet ist, wobei der Haltering (38) von einem mit dem Ventilkörper (26) einstückig verbundenen Halteelement (40) formschlüssig gehalten wird.

2. Kupplungsteil nach Anspruch 1,
**dadurch gekennzeichnet, dass** der Haltering (38) an seinem radial inneren Umfang ein axial in Ventil-Öffnungsrichtung nach hinten vorspringendes und zur axialen Abstützung in einem von der Ringdichtung (30) umschlossenen Bereich unmittelbar an dem Ventilkörper (26) anliegendes Anschlagelement (42) aufweist.

3. Kupplungsteil nach Anspruch 2,
**dadurch gekennzeichnet, dass** der Haltering (38) mit seinem Anschlagelement (42) in Anpassung an die Ringdichtung (30) derart ausgelegt ist, dass die Ringdichtung (30) in ihrem von dem Haltering (38) überdeckten Bereich definiert und vorzugsweise ohne elastische Druckverformung zwischen dem Ventilkörper (26) und dem Haltering (38) gekammert ist.

4. Kupplungsteil nach einem der Ansprüche 1 bis 3,
**dadurch gekennzeichnet, dass** der Ventilkörper (26) in seinem radial äußeren, die Ringdichtung (30) umschließenden Umfangsbereich einen in Schließrichtung vorspringenden Anschlagabschnitt (44) derart aufweist, dass der Ventilkörper (26) in seiner Schließstellung unter definierter elastischer Verpressung der Ringdichtung (30) an einer Gegenfläche innerhalb des Kupplungsgehäuses (22) anliegt.

5. Kupplungsteil nach einem der Ansprüche 1 bis 4,
**dadurch gekennzeichnet, dass** das den Haltering (38) halternde Halteelement (40) derart ausgebildet ist, dass es aus einem Vormontagezustand, in dem es einen ein axiales Aufsetzen des Halterings (38) ermöglichenden Außendurchmesser (DA) aufweist, in einen Fertigmontagezustand plastisch umgeformt oder umformbar ist, in dem es mit seinem Außenumfang formschlüssig in den Innenumfang des Halterings (38) eingreift.

6. Kupplungsteil nach Anspruch 5,
**dadurch gekennzeichnet, dass** das Halteelement (40) über einen zentrischen, stiftartigen Verbindungsabschnitt (46) mit dem Ventilkörper (26) einstückig verbunden ist, wobei in dem Vormontagezustand das Halteelement (40) sich ausgehend von dem Verbindungsabschnitt (46) leicht konisch und auf seiner in Schließrichtung weisenden Vorderseite eine konische oder konkave Vertiefung (48) aufweisend in Schließrichtung nach vorne erstreckt, und wobei der Halteabschnitt (36) durch einen axialen Stauchvorgang in seinen bevorzugt scheibenförmigen Fertigmontagezustand umgeformt oder umformbar ist.

7. Kupplungsteil nach Anspruch 5 oder 6,
**dadurch gekennzeichnet, dass** das Halteelement (40) im Fertigmontagezustand mit einer äußeren konischen Umfangsfläche (50) formschlüssig in einer fasenartigen Gegenfläche (54) des Halterings (38) sitzt.

8. Kupplungsteil nach einem der Ansprüche 1 bis 7,
**dadurch gekennzeichnet, dass** das Halteelement (40) mit seiner vorderen Stirnfläche (40a) sowie der Haltering (38) mit seiner vorderen Stirnringfläche (38a) in einer gemeinsamen Ebene liegen.

9. Kupplungsteil nach einem der Ansprüche 1 bis 8,
**dadurch gekennzeichnet, dass** die Ringdichtung (30) als vorzugsweise flache Ringscheibe ausgebildet ist.

10. Kupplungsteil nach einem der Ansprüche 1 bis 9,
**dadurch gekennzeichnet, dass** der Ventilkörper (26) in seinem sich axial in Öffnungsrichtung an den vorderen Umfangsbereich anschließenden Bereich eine zylindrische Führungsfläche (56) aufweist, die bevorzugt in mehrere axiale Führungsarme (58) übergeht, die zwischen sich Strömungspassagen für das Druckmittel bilden.

11. Kupplungsteil nach einem der Ansprüche 1 bis 10,
**dadurch gekennzeichnet, dass** innerhalb des Kupplungsgehäuses (22) in einem Bereich, in dem der Ventilkörper (26) in der Öffnungsstellung angeordnet ist, eine umfangsgemäße innere Durchmessererweiterung (62) gebildet ist.

12. Kupplungsteil nach einem der Ansprüche 1 bis 11,
**gekennzeichnet durch** eine Ausgestaltung als Kupplungsmuffe (2) mit einer Aufnahmeöffnung zum bereichsweisen Einstecken eines zugehörigen Kupplungssteckers (4).

13. Kupplungsteil nach einem der Ansprüche 1 bis 12,
**dadurch gekennzeichnet, dass** die in der Schließstellung mit der Ringdichtung (30) des Ventilkörpers (26) zusammenwirkende Dichtfläche (34) an einem einstückig mit dem Kupplungsgehäuse (22) ausgebildeten, radial nach innen ragenden Ringvorsprung (68) gebildet ist, wobei das Kupplungsgehäuse (22) in seinem hinteren, der vorderen Gehäuseöffnung (32) axial gegenüberliegenden Bereich lösbar mit einem eine Montageöffnung verschließenden Anschlussteil (70) verbunden ist.

14. Kupplungsteil nach einem der Ansprüche 1 bis 13,
**gekennzeichnet durch** Verriegelungsmittel (16) zum lösbaren Verriegeln der Kupplungsteile (2, 4) in der steckgekuppelten Kupplungslage, wobei vorzugsweise die Verriegelungsmittel (16) von einem Außengewinde (18) des Kupplungsgehäuses (22) gebildet sind, wobei auf das Außengewinde (18) eine Überwurfmutter (20) des anderen Kupplungsteils (4) aufschraubbar ist.

## Claims

1. A coupling part (2) for a pressure medium line coupling (1) - consisting of two coupling parts (2, 4) which are able to be assembled together for coupling and which have closing valves (10, 12) which in the process automatically mutually open - wherein the closing valve (10) has a valve body (26) which in a coupling housing (22) is guided in an axially movable manner according to a coupling insertion axis in such a manner that the valve body (26) is during the coupling procedure automatically movable, through contact on the other coupling part (4) and against a closing spring force, from a closing position into the coupling housing (22) into an opening position, wherein the valve body (26) has an elastic ring seal (30) in its front circumferential region directed in the closing direction, which ring seal cooperates as an axial seal with a sealing surface (34), enclosing a front housing opening (32), of the coupling housing (22), wherein the ring seal (30) is covered from the front in its radially inner circumferential region by a holding portion (36) of the valve body (26) and is exposed in its radially outer circumferential region for axial contact on the sealing surface (34), **characterized in that** the holding portion (36) covering regions of the ring seal (30) from the front is formed by a holding ring (38), wherein the holding ring (38) is held in a form-locked manner by a holding element (40) integrally connected to the valve body (26).

2. A coupling part according to claim 1, **characterized in that** at its radially inner circumference, the holding ring (38) has a stop element (42) which projects rearwards axially in the valve opening direction and which, for axial support, directly contacts the valve body (26) in a region surrounded by the ring seal (30).

3. A coupling part according to claim 2, **characterized in that** the holding ring (38) with its stop element (42) is adapted to the ring seal (30) in construction in such a manner that in its region covered by the holding ring (38), the ring seal (30) is clamped between the valve body (26) and the holding ring (38) in a defined manner and preferably without elastic compressive deformation.

4. A coupling part according to any one of claims 1 to 3, **characterized in that** in its radially outer circumferential region surrounding the ring seal (30), the valve body (26) has a stop portion (44), projecting in the closing direction, in such a manner that the valve body (26) in its closing position contacts, under defined elastic compression of the ring seal (30), a counter surface within the coupling housing (22).

5. A coupling part according to any one of claims 1 to 4, **characterized in that** the holding element (40) making fast the holding ring (38) is formed in such a manner that it is plastically deformed or deformable from a pre-assembly state, in which it has an external diameter (DA) enabling axial attachment of the holding ring (38), into a final assembly state, in which it engages into the inner circumference of the holding ring (38) in a form-locked manner with its outer circumference.

6. A coupling part according to claim 5, **characterized in that** the holding element (40) is integrally connected to the valve body (26) via a central, pin-like connecting portion (46), wherein in the pre-assembly state, the holding element (40) extends, issuing from the connecting portion (46), forwards in the closing direction in a slightly conical manner and with a conical or concave depression (48) at its front side directed in the closing direction, and wherein the holding portion (36) is deformed or deformable into its preferably disc-shaped final assembly state by an axial upsetting operation.

7. A coupling part according to claim 5 or 6, **characterized in that** in the final assembly state, the holding element (40) sits in a form-locked manner in a chamfer-like counter surface (54) of the holding ring (38) by means of an outer, conical circumferential surface (50).

8. A coupling part according to any one of claims 1 to 7, **characterized in that** the holding element (40) with its front end surface (40a) as well as the holding ring (38) with its front end ring surface (38a) lie in a common plane.

9. A coupling part according to any one of claims 1 to 8, **characterized in that** the ring seal (30) is in the form of a preferably flat annular disc.

10. A coupling part according to any one of claims 1 to 9, **characterized in that** the valve body (26) has a cylindrical guide surface (56) in its region axially adjoining the front circumferential region in the opening direction, which guide surface preferably becomes a plurality of axial guide arms (58) forming therebetween flow passages for the pressure medium.

11. A coupling part according to any one of claims 1 to 10, **characterized in that** a circumferential, inner diameter widening (62) is formed within the coupling housing (22), in a region in which the valve body (26) is arranged in the opening position.

12. A coupling part according to any one of claims 1 to 11, **characterized by** a design as a coupling sleeve (2) with a receiving opening for the partial insertion of an associated coupling plug (4).

13. A coupling part according to any one of claims 1 to 12, **characterized in that** the sealing surface (34) cooperating with the ring seal (30) of the valve body (26) in the closing position is formed at an annular projection (68) which is integral with the coupling housing (22) and which projects radially inwards, wherein the coupling housing (22) is, in its rear region axially opposite the front housing opening (32), detachably connected to a connection part (70) closing an assembly opening.

14. A coupling part according to any one of claims 1 to 13, **characterized by** locking means (16) for detachable locking of the coupling parts (2, 4) in the plug-in-coupled coupling position, wherein preferably the locking means (16) are formed by an external thread (18) of the coupling housing (22), wherein a union nut (20) of the other coupling part (4) can be screwed onto the external thread (18).

## Revendications

1. Elément de raccordement (2) destiné à un raccord de conduite de fluide sous pression (1) - constitué de deux éléments de raccordement (2, 4) pouvant être emboîtés l'un dans l'autre en vue du raccordement et présentant des soupapes de fermeture (10, 12) s'ouvrant mutuellement de façon automatique lors de l'emboîtement -, la soupape de fermeture (10) présentant un corps de soupape (26) qui est guidé dans une enveloppe de raccordement (22) avec possibilité de déplacement axial suivant un axe d'emboîtement de raccord (24), de telle manière que, lors de l'opération de raccordement, il peut être déplacé, par appui contre l'autre élément de raccordement (4), à partir d'une position de fermeture, de façon automatique à l'encontre d'une force de ressort de fermeture, pour entrer dans l'enveloppe de raccordement (22), dans une position d'ouverture, le corps de soupape (26) présentant dans sa zone périphérique avant, orientée dans le sens de la fermeture, un joint annulaire (30) élastique qui coopère en tant que joint axial avec une surface d'étanchéité (34), entourant une ouverture d'enveloppe avant (32), de l'enveloppe de raccordement (22), le joint annulaire (30) étant recouvert, dans sa zone périphérique radialement intérieure, de devant par une partie de maintien (36) du corps de soupape (26), et étant dégagé dans sa zone périphérique radialement extérieure, en vue de l'application axiale contre la surface d'étanchéité (34),
**caractérisé en ce que** la partie de maintien (36), recouvrant par endroits le joint annulaire (30) de devant, est formée d'une bague de maintien (38), la bague de maintien (38) étant tenue par complémentarité de forme par un élément de maintien (40) lié d'un seul tenant au corps de soupape (26).

2. Elément de raccordement selon la revendication 1, **caractérisé en ce que** la bague de maintien (38) présente, sur sa périphérie radialement intérieure, un élément de butée (42) qui fait saillie axialement vers l'arrière, dans le sens de l'ouverture de la soupape, et est appliqué directement contre le corps de soupape (26), en vue de l'appui axial dans une région entourée par le joint annulaire (30).

3. Elément de raccordement selon la revendication 2, **caractérisé en ce que** la bague de maintien (38), avec son élément de butée (42), est adaptée au joint annulaire (30) et conçue de telle manière que le joint annulaire (30) se trouve dans un compartiment entre le corps de soupape (26) et la bague de maintien (38), de façon définie dans sa région recouverte par la bague de maintien (38) et de préférence sans déformation élastique par compression.

4. Elément de raccordement selon l'une des revendications 1 à 3, **caractérisé en ce que** le corps de soupape (26), dans sa zone périphérique radialement extérieure entourant le joint annulaire (30), présente une portion formant butée (44), faisant saillie dans le sens de fermeture, de telle manière que le corps de soupape (26), dans sa position de fermeture, est appliqué contre une surface antagoniste à l'intérieur de l'enveloppe de raccordement (22), avec une compression élastique définie du joint annulaire (30).

5. Elément de raccordement selon l'une des revendications 1 à 4, **caractérisé en ce que** l'élément de maintien (40) tenant la bague de maintien (38) est réalisé de telle manière que, partant d'un état de prémontage dans lequel il présente un diamètre extérieur (DA) permettant une mise en place axiale de la bague de maintien (38), il est déformé ou peut être déformé de façon plastique pour être à l'état de montage final, dans lequel il s'engage avec sa périphérie extérieure par complémentarité de forme dans la périphérie intérieure de la bague de maintien (38).

6. Elément de raccordement selon la revendication 5, **caractérisé en ce que** l'élément de maintien (40) est lié d'un seul tenant au corps de soupape (26) par l'intermédiaire d'une partie de jonction (46) centrée en forme de tige, sachant qu'à l'état de prémontage, l'élément de maintien (40) s'étend vers l'avant dans le sens de fermeture à partir de la partie de jonction (46), avec une forme légèrement conique et en présentant un creux (48) conique ou concave sur sa face avant orientée dans le sens de fermeture, et sachant que la partie de maintien (36) est déformée ou peut être déformée par une opération de refoulement axial pour adopter son état de montage final, de préférence en forme de disque.

7. Elément de raccordement selon la revendication 5 ou 6, **caractérisé en ce que**, à l'état de montage final, l'élément de maintien (40) est en appui par une surface périphérique (50) extérieure conique, avec complémentarité de forme, dans une surface antagoniste (54) en forme de chanfrein de la bague de maintien (38).

8. Elément de raccordement selon l'une des revendications 1 à 7, **caractérisé en ce que** l'élément de maintien (40), avec sa face frontale (40a) avant, ainsi que la bague de maintien (38), avec sa surface annulaire frontale avant (38a), se situent dans un même plan.

9. Elément de raccordement selon l'une des revendications 1 à 8, **caractérisé en ce que** le joint annulaire (30) est réalisé comme rondelle, de préférence plate.

10. Elément de raccordement selon l'une des revendications 1 à 9, **caractérisé en ce que** le corps de soupape (26), dans sa région se raccordant axialement à la zone périphérique avant, dans le sens de l'ouverture, présente une surface de guidage (56) cylindrique qui se transforme de préférence en plusieurs bras de guidage (58) axiaux, lesquels forment entre eux des passages d'écoulement pour le fluide sous pression.

11. Elément de raccordement selon l'une des revendications 1 à 10, **caractérisé en ce qu'**à l'intérieur de l'enveloppe de raccordement (22), dans une région dans laquelle le corps de soupape (26) est placé dans la position d'ouverture, est réalisé un élargissement de diamètre (62) interne sur la périphérie.

12. Elément de raccordement selon l'une des revendications 1 à 11, **caractérisé en ce qu'**il est réalisé comme manchon de raccordement (2) doté d'une ouverture de réception pour l'insertion partielle d'une fiche de raccordement (4) associée.

13. Elément de raccordement selon l'une des revendications 1 à 12, **caractérisé en ce que** la surface d'étanchéité (34), qui coopère avec le joint annulaire (30) du corps de soupape (26) dans la position de fermeture, est formée sur une saillie annulaire (68) réalisée d'un seul tenant avec l'enveloppe de raccordement (22) et avançant radialement vers l'intérieur, l'enveloppe de raccordement (22) étant reliée, dans sa région arrière située axialement à l'opposé de l'ouverture d'enveloppe avant (32), de façon amovible à un élément de connexion (70) fermant une ouverture de montage.

14. Elément de raccordement selon l'une des revendications 1 à 13, **caractérisé en ce qu'**il comporte des moyens de verrouillage (16) pour le verrouillage libérable des éléments de raccordement (2, 4) dans la position de raccordement emboîtée, les moyens de verrouillage (16) étant de préférence constitués d'un filetage extérieur (18) de l'enveloppe de raccordement (22), un écrou-raccord (20) de l'autre élément de raccordement (4) pouvant être vissé sur le filetage extérieur (18).
